(19) Europäisches Patentamt
European Patent Office
Office européen des brevets

(11) **EP 4 064 150 A1**

(12) **EUROPEAN PATENT APPLICATION**
published in accordance with Art. 153(4) EPC

(43) Date of publication:
**28.09.2022 Bulletin 2022/39**

(51) International Patent Classification (IPC):
***G06Q 10/06*** *(2012.01)*

(21) Application number: **20891152.9**

(22) Date of filing: **06.08.2020**

(86) International application number:
**PCT/KR2020/010390**

(87) International publication number:
**WO 2021/101018 (27.05.2021 Gazette 2021/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.11.2019 KR 20190150085**

(71) Applicant: **Crowdworks, Inc.**
**Seoul 06134 (KR)**

(72) Inventors:
• **PARK, Min Woo**
  **Seongnam-si, Gyeonggi-do 13626 (KR)**
• **JANG, Jeong Sik**
  **Seongnam-si, Gyeonggi-do 13532 (KR)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD FOR ADJUSTING WORK UNIT PRICE ACCORDING TO WORK PROGRESS SPEED OF CROWDSOURCING-BASED PROJECT**

(57) Disclosed is a method of adjusting a work unit price according to a work progress speed of a crowdsourcing-based project. The method includes setting a desired work progress speed of the project based on a predetermined work scale of the project and a target work completion period of the project before a project is opened, measuring an actual work progress speed at each predetermined period after the project is opened, and automatically adjusting the work unit price at the respective predetermined period by comparing the desired work progress speed with the actual work progress speed.

FIG. 3

**Description**

[TECHNICAL FIELD]

Embodiments of the inventive concept described herein relate to a method of adjusting a work unit price according to the work progress speed of a crowdsourcing-based project.

[BACKGROUND ART]

Nowadays, companies are being increased to collect and process a large amount of crowdsourcing-based data that allows the general crowd to participate in some processes of corporate activities. In other words, after opening one project, a company allows the general crowd (i.e., workers and checkers) to participate in the corresponding project and then collects necessary information by allowing the workers perform works and allowing the checkers to perform inspections.

The crowdsourcing-based project aims to obtain the targeted amount of data during a specified time. To this end, it is important to uniformly keep a work progress speed of the corresponding project. Because the work progress speed is mainly affected by a worker participation rate, the work progress speed needs to be optimized by adjusting the worker participation rate.

The worker participation rate is affected by various factors, but a work unit price among the various factors is affected greatly. When the work unit price is high, the worker participation rate increases. When the work unit price is low, the worker participation rate decreases.

Nowadays, a project starts with a fixed unit price. When necessary, an operator intervenes to manually adjust a work unit price. Because it is difficult to grasp the difficulty of a work in advance before the project starts, it is difficult to determine an appropriate work unit price. Accordingly, the operator monitors the progress of the project. When the participation rate is too low or too high, the operator may manually adjust the work unit price.

However, it is inefficient for the operator to continuously monitor the progress of the project. Moreover, it is difficult to determine the appropriate work unit price at an appropriate time.

When the operator fails to adjust the appropriate work unit price at an appropriate time, it may fail to obtain the targeted data during the specified period of the project. For example, when the operator excessively increases the work unit price, target data may be obtained faster than expectations, but a specified budget may be exceeded. Besides, when the operator excessively reduces the work unit price, it is impossible to obtain the targeted data during a specified period. Also, even though the operator adjusts the work unit price when the operator finds dangerous situations late in a work progress, the dangerous situations may not be solved, and thus the operator fails to obtain the target data during a target period.

[DETAILED DESCRIPTION OF THE INVENTION]

[TECHINICAL PROBLEM]

Embodiments of the inventive concept provide a method of adjusting a work unit price according to the work progress speed of a crowdsourcing-based project.

Problems to be solved by the inventive concept are not limited to the problems mentioned above, and other problems not mentioned will be clearly understood by those skilled in the art from the following description.

[TECHNICAL SOLUTION]

According to an embodiment, a method for adjusting a work unit price according to a work progress speed of a crowdsourcing-based project and performed by a computer includes setting a desired work progress speed of the project based on a predetermined work scale of the project and a target work completion period of the project before the project is opened, measuring an actual work progress speed at each predetermined period after the project is opened, and automatically adjusting the work unit price at the respective predetermined period by comparing the desired work progress speed with the actual work progress speed. The comparing of the desired work progress speed with the actual work progress speed is performed based on a value "$a \times b$" obtained by multiplying a value 'a' from dividing the number of works performed by workers during the predetermined period by the predetermined period, and a value 'b' from dividing the predetermined period by the target work completion period of the project. The adjusting of the work unit price includes increasing the work unit price when the actual work progress speed is slower than the desired work progress speed and decreasing the work unit price when the actual work progress speed is faster than the desired work progress speed.

In some embodiments of the inventive concept, the adjusting of the work unit price further includes determining an increment or a decrement, by which the work unit price is adjusted, by applying a weight to a unit increment or a unit decrement depending on a difference between the desired work progress speed and the actual work progress speed.

In some embodiments of the inventive concept, the method further includes generating relationship data between the increment or the decrement of the work unit price and the actual work progress speed by analyzing a change in the actual work progress speed according to the increment or the decrement after the automatically adjusting of the work unit price.

In some embodiments of the inventive concept, at a first time point of the project, the weight is set to an initial value and is applied when the work unit price is adjusted.

In some embodiments of the inventive concept, at a second time point after the first time point of the project, the weight is set to an optimal value based on the relationship data and is applied when the work unit price is adjusted.

In some embodiments of the inventive concept, the desired work progress speed is a value obtained by dividing the work scale of the project by the target work completion period of the project.

In some embodiments of the inventive concept, the adjusting of the work unit price includes maintaining the work unit price when the actual work progress speed is identical to the desired work progress speed.

In some embodiments of the inventive concept, the method further includes setting a start unit price of the work unit price in advance before the project is opened.

In some embodiments of the inventive concept, the method further includes setting a change range of the work unit price including a minimum value and a maximum value of the work unit price in advance.

In some embodiments of the inventive concept, the measuring of the actual work progress speed at the respective predetermined period after the project is opened includes measuring the actual work progress speed at the respective predetermined period after a predetermined time expires after the project is opened.

According to an embodiment, a computer program which is coupled to a computer being a piece of hardware and which is stored in a medium, to perform the method of adjusting a work unit price according to a work progress speed of a crowdsourcing-based project.

Other details according to an embodiment of the inventive concept are included in the detailed description and drawings.

[ADVANTAGEOUS EFFECTS OF THE INVENTION]

According to an embodiment of the inventive concept, it is possible to obtain the following effects.

First, targeted work data may be obtained during a specified period by periodically comparing a desired work progress speed and the actual work progress speed, automatically increasing or decreasing the work unit price depending on the comparison result, and adjusting the participation rate of workers.

Second, a situation where a project cost excessively occurs may be prevented by automatically adjust and optimize the work unit price periodically while the project is in progress and applying the optimized work unit price at the middle and late of the project. Accordingly, it is possible to contribute to cost reduction.

Third, the appropriate work unit price may be automatically managed at the appropriate time point while the project is progress, and thus the project may be operated at an optimal cost within a specified period. Accordingly, the management by the operator may not be required, and management resources/costs may be reduced.

Effects of the inventive concept are not limited to the effects mentioned above, and other effects not mentioned will be clearly understood by those skilled in the art from the following description.

[DESCRIPTION OF THE DRAWINGS]

FIG. 1 is a conceptual diagram of a crowdsourcing service, according to an embodiment of the inventive concept.

FIG. 2 is a flowchart for describing a progress process of a crowdsourcing-based project, according to an embodiment of the inventive concept.

FIG. 3 is a flowchart of a method of adjusting a work unit price according to a work progress speed of a crowdsourcing-based project, according to an embodiment of the inventive concept.

FIG. 4 is a diagram illustrating a timeline from the open of a project to the end of the project, according to an embodiment of the inventive concept.

FIGS. 5A and 5B are diagrams illustrating graphs indicating that a work unit price is automatically adjusted at each predetermined period, according to an embodiment of the inventive concept.

FIGS. 6A and 6B are diagrams illustrating graphs indicating that a work unit price is manually adjusted, according to a conventional method.

FIG. 7 is a block diagram of a work unit price adjusting device according to a work progress speed of a crowdsourcing-based project, according to an embodiment of the inventive concept.

[BEST MODE]

The above and other aspects, features and advantages of the inventive concept will become apparent from embodiments to be described in detail in conjunction with the accompanying drawings. The inventive concept, however, may be embodied in various different forms, and should not be construed as being limited only to the illustrated embodiments. Rather, these embodiments are provided as examples so that the inventive concept will be thorough and complete, and will fully convey the scope of the inventive concept to those skilled in the art. The inventive concept may be defined by the scope of the claims.

The terms used herein are provided to describe embodiments, not intended to limit the inventive concept. In the specification, the singular forms include plural forms unless particularly mentioned. The terms "comprises" and/or "comprising" used herein do not exclude the presence or addition of one or more other components, in addition to the aforementioned components. The same reference numerals denote the same components throughout the specification. As used herein, the term "and/or" includes each of the associated components and all combinations of one or more of the associated components. It will be understood that, although the terms "first", "second", etc., may be used herein to describe various components, these components should not be limited by these terms. These terms are only used to distinguish one component from another component. Thus, a first component that is discussed below could be termed a second component without departing from the technical idea of the inventive concept.

Unless otherwise defined, all terms (including technical and scientific terms) used herein have the same meaning as commonly understood by those skilled in the art to which the inventive concept pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

Hereinafter, embodiments of the inventive concept will be described in detail with reference to accompanying drawings.

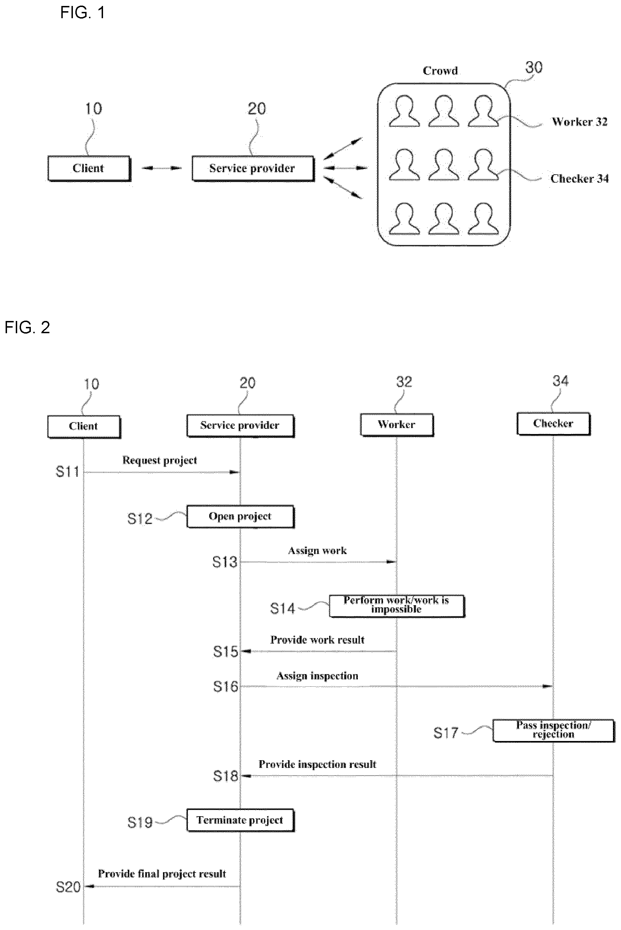

FIG. 1 is a conceptual diagram of a crowdsourcing service, according to an embodiment of the inventive concept.

Referring to FIG. 1, a crowdsourcing service includes a client 10, a service provider 20, and crowd 30.

The client 10 refers to a company or individual that requests a crowdsourcing-based project (hereafter, referred to as a "project").

The client 10 requests a project for the purpose of collecting source data or data annotation. The collection of source data means the collection of raw data such as the collection of recorded voice and photo collection. The data annotation means entering related annotation data into source data such as texts, photos, and videos. For example, the data annotation may include, but is not limited to, finding an entity in a given text or finding a similar sentence. On the other hand, the type of project described above is only one embodiment, and various projects may be handled depending on the design of a client in the inventive concept.

The service provider 20 refers to a company that provides a crowdsourcing service.

When receiving a project request for a product or service from the client 10, the service provider 20 assigns a work for the corresponding project to the general crowd 30 and receives the work result from the crowd 30. Afterward, a final product extracted based on the work result is provided to the client 10.

At this time, the service provider 20 provides a crowdsourcing service to the client 10 and the crowd 30 through a crowdsourcing platform (hereinafter, referred to as a "platform"). That is, when receiving the project request from the client 10, the service provider 20 opens a project on the platform. Afterward, when the work result for the opened project is received from the crowd 30, the project may be terminated on the platform, and the final product may be extracted and provided to the client 10.

The crowd 30 refers to the general crowd participating in the project opened on the platform. Here, the crowd 30 may participate in a project opened on the platform through an application or website, which is provided by the service provider 20.

The crowd 30 includes a worker 32 and a checker 34.

The worker 32 determines to participate in a specific project among a plurality of projects opened to the platform. Afterward, the worker 32 performs works such as the collection of source data or data annotation, and transmits the work result to the platform.

The checker 34 determines to participate in a specific project among the plurality of projects opened to the platform. Afterward, the checker 34 inspects the work result performed by the worker 32. The checker 34 may pass or reject the work based on the result of the inspection and may enter the reason for rejection when the work is rejected.

FIG. 2 is a flowchart for describing a progress process of a crowdsourcing-based project, according to an embodiment of the inventive concept.

First of all, the client 10 requests one or more projects to the service provider 20 (S11).

Afterward, the service provider 20 opens the requested project on a platform (S12). In this case, the service provider 20 may determine a grade in consideration of the difficulty of the corresponding project before the project is opened. That is, the grade of the crowd 30 provided with the corresponding project may be determined depending on the difficulty level. Accordingly, it is possible to increase the reliability of the work result of the project.

Afterward, the service provider 20 assigns a work to the worker 32 having the corresponding grade or more depending on the grade of the project (S13).

Afterward, the worker 32 performs the assigned work (S14). At this time, with respect to a work that is impossible for some reason, the worker 32 may enter the reason that the work is impossible, without performing the work.

Afterward, the service provider 20 receives the work result from the worker 32 (S15), and assigns an inspection work for the corresponding work result to the checker 34 (S16).

Afterward, the checker 34 performs the assigned inspection (S17). At this time, when it is determined that the work has been performed properly, the checker 34 determines to pass the inspection. When it is determined that the inspection work is wrong, the checker 34 determines to rejection. When determining the rejection, the checker 34 enters a rejection reason, that is, the reason that the work is determined as being wrong.

Afterward, the service provider 20 receives an inspection result from the checker 34 (S18).

When the inspection result is a pass, the service provider 20 uses the corresponding work result as valid data and extracts the final product based on the valid data at the end of the project.

When the inspection result corresponds to the rejection, the service provider 20 may internally perform the inspection again or may assign the work to the worker 32 again and then may allow the worker 32 to perform the work.

Afterward, when a project period ends or valid data is sufficiently secured, the service provider 20 terminates the project (S19) and calculates the final result based on the secured valid data and provides the calculated result to the client 10 (S20).

At this time, before the project is terminated, the service provider 20 evaluates the execution result of the worker 32 and the checker 34, calculates a work fee and an inspection fee depending on the evaluation, and pays the work and inspection fees to the worker 32 and the checker 34 respectively.

In the meantime, FIGS. 1 and 2 simply show the client 10, the service provider 20, the worker 32, and the checker 34. However, the client 10, the service provider 20, the worker 32, and the checker 34 refer to computer devices or telecommunication devices such as a smartphone, a tablet PC, PDA, a laptop PC, a desktop PC, a server, and the like operated by each participant.

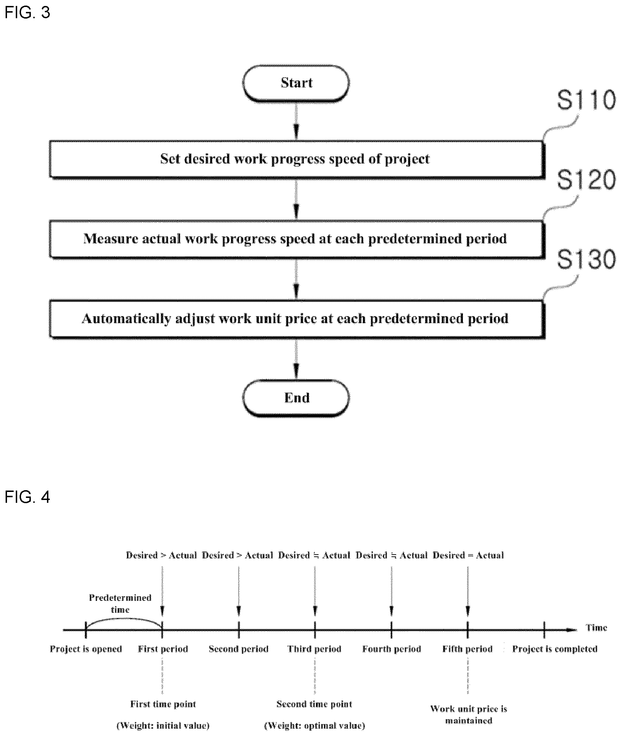

FIG. 3 is a flowchart of a method of adjusting a work unit price according to a work progress speed of a crowdsourcing-based project, according to an embodiment of the inventive concept. FIG. 4 is a diagram illustrating a timeline from the open of a project to the end of the project, according to an embodiment of the inventive concept.

In the meantime, operations illustrated in FIG. 3 may be understood to be performed by a platform server (hereinafter, referred to as a "server") operated by the service provider 20, but is not limited thereto.

Also, the worker 32 or the checker 34 performs a work by using a predetermined terminal device. A terminal device of the worker 32 or the checker 34 may be a computer device or a telecommunication device such as a smartphone, a tablet PC, PDA, a laptop PC, a desktop PC, or the like, but is not limited thereto.

Referring to FIG. 3, before the project is opened, the server sets a desired work progress speed of a project based on a predetermined work scale of a project and a target work completion period of the project (S110).

When receiving a project request from the client 10, the service provider 20 receives a total project period (the target work completion period of the project) desired by the client 10 and the total amount (the work scale of the project) of data that the client 10 wants to obtain within the corresponding period and stores information about the total project period and the total amount of data in a server.

Afterward, the server sets the desired work progress speed to a value obtained by dividing the work scale of the corresponding project by the target work completion period of the project. For example, when the work scale of a specific project is 6,000 pieces and the target work completion period is 5 days, the desired work progress speed of the specific project is set to "6,000 pieces/120 hours = 50 pieces/hour". This means that 50 works per hour, which are performed by the plurality of workers 32 participating in the corresponding project, are a desirable progress speed.

Moreover, the server sets a change range of a work unit price in advance before the project is opened.

That is, the server sets a minimum value and a maximum value of the work unit price in consideration of a project budget and a minimum wage. Accordingly, whenever the work unit price is automatically adjusted every predetermined period, the work unit price is adjusted within the predetermined change range. With regard to the adjustment of the work unit price to be described later, even when the work unit price needs to be adjusted to be lower than the minimum value or the work unit price needs to be adjusted to be higher than the maximum value, the work unit price will be limited within a range between the minimum value and the maximum value due to the predetermined change range.

Besides, before the project is opened, the server sets a unit increment/decrement for adjusting the work unit price of the project in advance.

That is, when the work unit price is increased or decreased from the work unit price in the previous period, the server needs to set whether the work unit price is adjusted in units of 100 won or 1,000 won, in advance by comparing the desired work progress speed with the actual work progress speed in a current period. The unit increment/decrement needs to be set to an appropriate scale such that the work unit price is capable of being adjusted within the predetermined change range of the work unit price.

Furthermore, before the project is opened, the server sets a start unit price of the project in advance.

The start unit price may be set with reference to a project similar to a specific project, which is scheduled to be opened, from among projects previously performed. The start unit price may be set to the minimum value of the work unit price or the maximum value of the work unit price. When the start unit price is set to the minimum value, the work unit price may be adjusted to be periodically increased at the beginning of the project. Alternatively, when the start unit price is set to the maximum value, the work unit price may be adjusted to be periodically decreased at the beginning of the project.

Also, before the project is opened, the server sets a period for checking an actual work progress speed in advance.

That is, the server sets a specific time interval (e.g., two hours) to a period, and measures the actual work progress speed at each time while the project is in progress.

Afterward, after the project is opened, the server measures the actual work progress speed of the project at each predetermined period (S120).

At this time, as illustrated in FIG. 4, after a predetermined time elapses after the project is opened, the server measures the actual work progress speed for each predetermined period.

In other words, after the project is opened and then the workers 32 sufficiently participate in the project during a predetermined time, the unit price is adjusted by starting to measure the actual work progress speed at a first period. Here, the predetermined time may be determined as a time longer or shorter than a speed measurement period. Moreover, the predetermined time may be determined as a time in which the predetermined number of workers participated in the project or a time in which the predetermined number of works was completed. When the actual work progress speed is measured while the workers 32 do not sufficiently participate in the project from the beginning of the project, the representativeness is not reflected with regard to the actual work progress speed, and thus extreme bias occurs. Accordingly, the increase or decrease of the work unit price may occur rapidly. On the other hand, when the actual work progress speed is periodically measured after the workers 32 sufficiently participate in the project at the beginning of the project, a time to find the appropriate unit price for the project may be shortened, and the project may be completed with the minimum cost within the target work completion period.

Next, the server compares the measured actual work progress speed with the predetermined desired work progress speed and automatically adjusts the work unit price through the comparison result (S130).

Referring to Equation 1 below, the desired work progress speed is compared with the actual work progress speed based on a value 'k' obtained by multiplying a value from dividing the number of works performed by the workers 32 during a predetermined period by the predetermined period, and a value from dividing the predetermined period by a target work completion period of the project.

The server measures the actual work progress speed based on the number of works actually performed by workers during a time corresponding to a period.

[Equation 1]

$$k = \left( \frac{Number\ of\ works\ performed\ during\ predetermined\ period}{Predetermined\ period} \right)$$
$$\times \left( \frac{Predetermined\ period}{Target\ work\ completion\ period} \right)$$

When the actual work progress speed is slower than the desired work progress speed, the server increases the work unit price to increase the participation rate of the workers 32. When the actual work progress speed is faster than desired work progress speed, the server decreases the work unit price to decrease the participation rate of the workers 32. When the actual work progress speed is slower than the desired work progress speed, the project may not be completed within the target work completion period, and thus there is a need to increase the participation rate of the workers 32. On the other hand, when the actual work progress speed is faster than the desired work progress speed, there is not much concern about the period, and it is possible to save relatively budget. Accordingly, there is a need to lower the work unit price to an appropriate value.

The server determines an increment/decrement, by which the work unit price is adjusted, by applying a weight to the unit increment/decrement depending on a difference between the desired work progress speed and the actual work progress speed.

In detail, the work unit price is basically increased or decreased by the unit increment/decrement depending on a result of comparing the actual work progress speed with the desired work progress speed. That is, when the previous work unit price is 1000 won and the unit increment/decrement is set to 100 won, the work unit price is increased to 1100 won or decreased to 900 won.

However, when a difference between the desired work progress speed and the actual work progress speed is great, the server adjusts the work unit price by applying a weight to the unit increment/decrement. In an embodiment, when the difference between the desired work progress speed and the actual work progress speed is within a first category, the server may apply a first weight. When the difference between the desired work progress speed and the actual work progress speed is within a second category, the server may apply a second weight greater than the first weight. For example, when the difference is 10 pieces/hour, a first weight may be 1.2. When the difference is 20 pieces/hour, a second weight may be 1.4. However, an embodiment is not limited thereto. The value of the weight is predetermined depending on the difference between the desired work progress speed and the actual work progress speed, and the recorded table of weights may be provided.

As shown in FIG. 4, at a first time point at which a first period of the project arrives, a weight is set to an initial value and is applied when a work unit price is adjusted.

In an embodiment, the weight is set to the initial value of '1', and this may not affect the increment/decrement of the work unit price in several predetermined periods positioned at the beginning.

Next, at a time point at which a second period arrives, the server automatically adjusts the work unit price by using a predetermined weight on a weight table depending on the difference between the desired work progress speed and the actual work progress speed.

After the first time point, the work unit price is automatically adjusted during several periods. In this case, after automatically adjusting the work unit price at each period, the server analyzes a change in the actual work progress speed according to an increment/decrement, and generates relationship data between an increment/decrement and the actual work progress speed.

Afterward, at the second time point of the project, the server sets a weight for adjusting the work unit price to an optimal value based on the relationship data. Here, the optimal value means a value estimated as a weight capable of completely canceling the difference between the desired work progress speed and the actual work progress speed. In FIG. 4, the second time point is illustrated as a time point at which the third period arrives, but is not limited thereto.

When the server trains the relationship data and applies a weight, the server may estimate how much the difference between the desired work progress speed and the actual work progress speed is reduced, in the next period.

Accordingly, the server adjusts the work unit price by setting the weight to an optimal value depending on the difference between the actual work progress speed measured at the second time point and the desired work progress speed.

In the meantime, it is possible to generate a weight model by using a mathematical model based on the statistics of the relationship data, but is not limited thereto. The server may finely and precisely adjust the weight by using the weight model.

In the meantime, the optimal value may be an estimated value, and thus the optimal value may differ from an expected value. Even though the optimal value is applied, there may be a difference between the desired work progress speed and the actual work progress speed. Accordingly, even after the second time point, the server periodically predicts the optimal value of the weight. When adjusting the work unit price, the server may apply the optimal value of the weight.

Afterward, when the work unit price is adjusted by applying the weight set to the optimal value during several predetermined periods, the actual work progress speed becomes the same as the desired work progress speed at a specific time point. The work unit price at this time is referred to as an "appropriate unit price". When the appropriate unit price is maintained and applied during the remaining periods, it is possible to keep a target work completion period while the project budget is minimized.

Referring to FIG. 4, in the first period and second period, at each of which the actual work progress speed is measured to be slower than the desired work progress speed, the work unit price is increased. At this time, the server may apply the weight set to the initial value to the increment of the work unit price depending on the difference between the actual work progress speed and the desired work progress speed.

Afterward, in the third period and the fourth period, the weight set to the optimal value is applied to the increment of the work unit price by the weight model.

Afterward, in the fifth period, it is understood that the actual work progress speed is the same as the desired work progress speed. The work unit price at this time is the appropriate unit price for the project, and thus the server maintains the appropriate unit price from the fifth period until the end of the project.

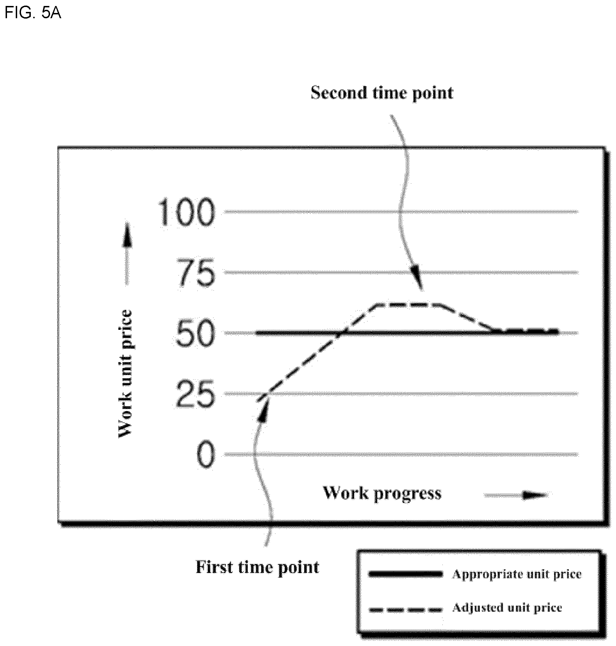

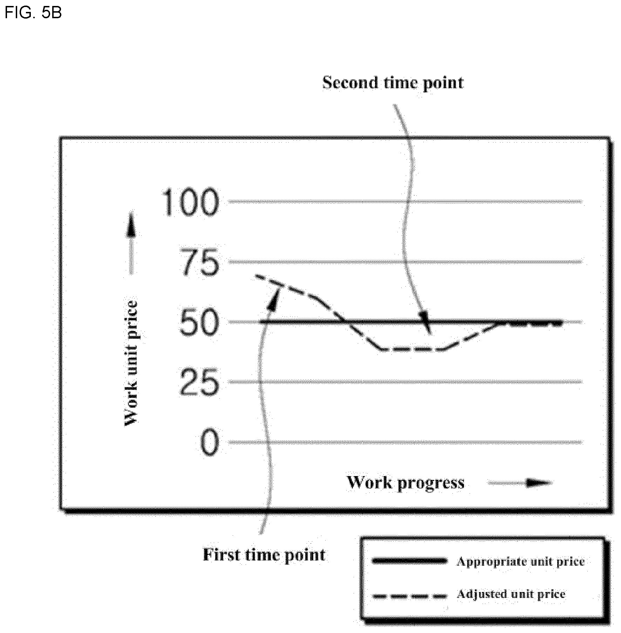

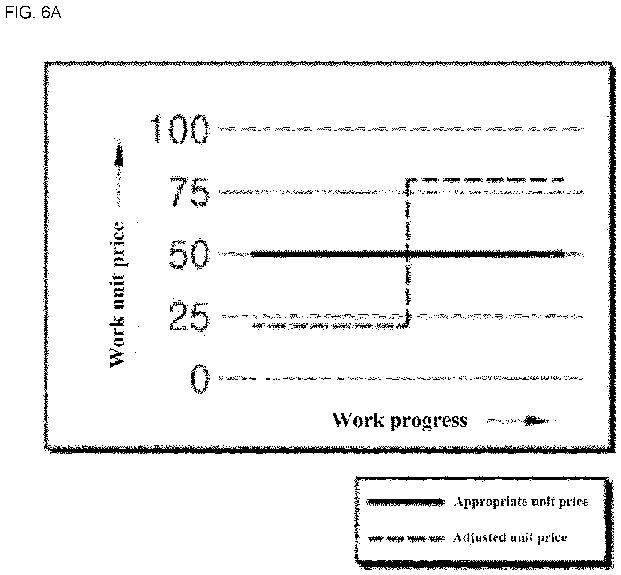

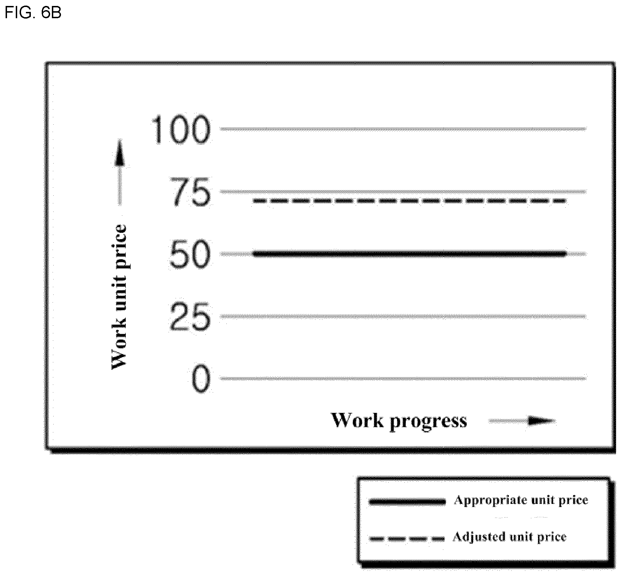

FIGS. 5A and 5B are diagrams illustrating graphs indicating that a work unit price is automatically adjusted at each predetermined period, according to an embodiment of the inventive concept. FIGS. 6A and 6B are diagrams illustrating graphs indicating that a work unit price is manually adjusted, according to a conventional method.

Referring to FIGS. 5A and 5B, FIG. 5A shows that a start unit price is set to a value lower than an appropriate unit price of a work. From a first time point, a server gradually increases a work unit price by applying a weight depending on a difference between an actual work progress speed and a desired work progress speed. Afterward, from a second time point at which the actual work progress speed is faster than the desired work progress speed, the server gradually decreases the work unit price by applying the weight. In this case, the above-described weight model may be used as described above. The difference between the actual work progress speed and the desired work progress speed is not great at the second time point compared to the first time point, and thus the weight becomes small. Afterward, the server uses the work unit price at a time point, at which the actual work progress speed is identical to the desired work progress speed, as an appropriate unit price and maintains the appropriate unit price until the project is completed.

FIG. 5B shows that the start unit price is set to a value higher than the appropriate unit price of a work. From the first time point, the server gradually decreases a work unit price by applying a weight depending on the difference between the actual work progress speed and the desired work progress speed. Afterward, from the second time point at which the actual work progress speed is slower than the desired work progress speed, the server gradually increases the work unit price by applying the weight. In this case, the above-described weight model may be used as described above. The difference between the actual work progress speed and the desired work progress speed is not great at the second time point compared to the first time point, and thus the weight becomes small. Afterward, the server uses the work unit price at a time point, at which the actual work progress speed is identical to the desired work progress speed, as an appropriate unit price and maintains the appropriate unit price until the project is completed.

Because it is difficult to accurately determine work difficulty in advance, the appropriate unit price is not known in advance. The server recognizes that the work unit price at a time point, at which the actual work progress speed is the same as the desired work progress speed, is the appropriate unit price afterward.

Referring to FIGS. 6A and 6B, FIG. 6A shows that a start unit price is set to a value lower than an appropriate unit price of a work. An operator identifying that the work progress speed is slow manually adjusts the work unit price. Because the operator does not know the appropriate unit price in advance, the operator may abruptly adjust the work unit price. Accordingly, the adjusted work unit price is set to be higher than the appropriate unit price. The operator is satisfied with the increased work progress speed, but the project budget is exceeded without controlling the work progress speed. Accordingly, the project will be terminated faster than expectations.

FIG. 6B shows that the start unit price is set to a value higher than the appropriate unit price of a work. Likewise, because the operator does not know the appropriate unit price in advance, the operator does not know whether the start unit price is set to be higher than the appropriate unit price. The operator is satisfied with the increased work progress speed, but the project budget is exceeded without controlling the work progress speed. Accordingly, the project will be terminated faster than expectations.

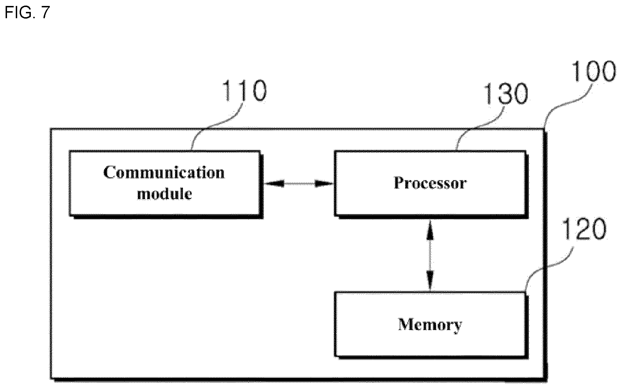

In the meantime, in the above description, operation S110 to operation S130 may be further divided into additional operations or may be combined into fewer operations, according to an embodiment of the inventive concept. In addition, some operations may be omitted as necessary, and the order between operations may be changed. In addition, even though other contents are omitted, the contents of FIG. 7 to be described later may also be applied to a method of adjusting a work unit price according to the work progress speed of the crowdsourcing-based project in FIGS. 1 to 5.

Hereinafter, according to an embodiment of the inventive concept, a work unit price adjusting device 100 according to a work progress speed of a crowdsourcing-based project will be described with reference to FIG. 7.

FIG. 7 is a block diagram of a work unit price adjusting device 100 according to a work progress speed of a crowdsourcing-based project, according to an embodiment of the inventive concept.

Referring to FIG. 7, the work unit price adjusting device 100 (hereinafter referred to as a 'work unit price adjusting device') according to a work progress speed of a crowdsourcing-based project includes a communication module 110, a memory 120, and a processor 130.

The communication module 110 transmits a crowdsourcing-based work for one project to the plurality of workers 32, and receives a work result from the plurality of workers 32.

The memory 120 stores a program for adjusting a work unit price according to a work progress speed based on data received from the communication module 110.

The processor 130 executes the program stored in the memory 120. As the processor 130 executes the program stored in the memory 120, the processor 130 may periodically measure a current work progress speed based on the work performed by each of the workers 32, may compare the measured current work progress speed with the desired work progress speed, and may optimize the work unit price of the project by automatically increasing or decreasing the work unit price depending on the comparison result.

The work unit price adjusting device 100 described with reference to FIG. 7 may be provided as a component of the above-described server.

According to an embodiment of the inventive concept, a method of adjusting a work unit price according to a work progress speed of a crowdsourcing-based project may be implemented with a computer program (or an application) and may be stored in a computer-readable recording medium such that the computer program is executed in combination with a computer being hardware.

The above-described program may include a code encoded by using a computer language such as C, C++, JAVA, Ruby, a machine language, or the like, which a processor (CPU) of the computer may read through the device interface of the computer, such that the computer reads the program and performs the methods implemented with the program. The code may include a functional code related to a function that defines necessary functions executing the method, and the functions may include an execution procedure related control code necessary for the processor of the computer to execute the functions in its procedures. Further, the code may further include additional information that is necessary for the processor of the computer to execute the functions or a memory reference related code on which location (address) of an internal or external memory of the computer should be referenced by the media. Further, when the processor of the computer is required to perform communication with another computer or a server in a remote site to allow the processor of the computer to execute the functions, the code may further include a communication related code on how the processor of the computer executes communication with another computer or the server or which information or medium should be transmitted/received during communication by using a communication module of the computer.

The stored medium refers not to a medium, such as a register, a cache, or a memory, which stores data for a short time but to a medium that stores data semipermanently and is read by a device. In detail, for example, the stored medium may include a read only memory (ROM), a random access memory (RAM), a CD-ROM, a magnetic tape, a floppy disk, and an optical data storage device, but the inventive concept is not limited thereto. That is, the program may be stored in various recording media on various servers, which the computer may access, or in various recording media on the computer of the user. Further, the media may be distributed in computer systems connected over a network such that codes readable by the computer are stored in a distributed manner.

Although embodiments of the inventive concept have been described herein with reference to accompanying drawings, it should be understood by those skilled in the art that the inventive concept may be embodied in other specific forms without departing from the spirit or essential features thereof. Therefore, the above-described embodiments are exemplary in all aspects, and should be construed not to be restrictive.

**Claims**

1. A method for adjusting a work unit price according to a work progress speed of a crowdsourcing-based project, the method performed by a computer comprising:

   before the crowdsourcing-based project (hereinafter referred to as a "project") is opened, setting a desired work progress speed of the project based on a predetermined work scale of the project and a target work completion period of the project;
   after the project is opened, measuring an actual work progress speed at each predetermined period; and
   automatically adjusting the work unit price at the respective predetermined period by comparing the desired work progress speed with the actual work progress speed,
   wherein the comparing of the desired work progress speed with the actual work progress speed is performed based on a value "a $\times$ b" obtained by multiplying a value 'a' from dividing the number of works performed by workers during the predetermined period by the predetermined period, and a value 'b' from dividing the predetermined period by the target work completion period of the project,
   wherein the adjusting of the work unit price includes:

      increasing the work unit price when the actual work progress speed is slower than the desired work progress speed; and
      decreasing the work unit price when the actual work progress speed is faster than the desired work progress speed,
      wherein the adjusting of the work unit price further includes:

         determining an increment or a decrement, by which the work unit price is adjusted, by applying a weight to a unit increment or a unit decrement depending on a difference between the desired work progress speed and the actual work progress speed,
         further comprising:

            generating relationship data between the increment or the decrement of the work unit price and the actual work progress speed by analyzing a change in the actual work progress speed according to the increment or the decrement, after the automatically adjusting of the work unit price,

wherein, at a first time point of the project, the weight is set to an initial value and is applied when the work unit price is adjusted, and

wherein, at a second time point after the first time point of the project, the weight is set to an optimal value based on the relationship data and is applied when the work unit price is adjusted.

2. The method of claim 1, wherein the desired work progress speed is a value obtained by dividing the work scale of the project by the target work completion period of the project.

3. The method of claim 1, wherein the adjusting of the work unit price includes:
   when the actual work progress speed is identical to the desired work progress speed, maintaining the work unit price.

4. The method of claim 1, further comprising:
   setting a start unit price of the work unit price in advance before the project is opened.

5. The method of claim 1, further comprising:
   setting a change range of the work unit price including a minimum value and a maximum value of the work unit price in advance.

6. The method of claim 1, wherein the measuring of the actual work progress speed at the respective predetermined period after the project is opened includes:
   after a predetermined time expires after the project is opened, measuring the actual work progress speed at the respective predetermined period.

7. A computer program which is coupled to a computer and which is stored in a computer-readable recording medium, to perform a method of adjusting a work unit price according to a work progress speed of a crowdsourcing-based project in one of claims 1 to 6.

FIG. 1

FIG. 2

FIG. 3

FIG. 4

FIG. 5A

Second time point

First time point

Work unit price

Work progress

——— Appropriate unit price

— — — Adjusted unit price

FIG. 5B

**Second time point**

**First time point**

Work unit price

Work progress

100
75
50
25
0

Appropriate unit price

Adjusted unit price

FIG. 6A

FIG. 6B

FIG. 7

## INTERNATIONAL SEARCH REPORT

| International application No. |
|---|
| **PCT/KR2020/010390** |

| **A.** | **CLASSIFICATION OF SUBJECT MATTER** |
|---|---|

**G06Q 10/06**(2012.01)i

According to International Patent Classification (IPC) or to both national classification and IPC

| **B.** | **FIELDS SEARCHED** |
|---|---|

Minimum documentation searched (classification system followed by classification symbols)

G06Q 10/06; G06F 17/21; G06F 17/30; G06Q 10/00; G06Q 10/10; G06Q 30/06; G06Q 50/04

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 크라우드소싱(crowdsourcing), 프로젝트(project), 작업(task), 희망(desire), 실제(actual), 진행속도(progress speed), 단가(unit price), 조정(adjust)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 2008-065452 A (AIDMA INC.) 21 March 2008. See paragraphs [0015]-[0020], claims 1-2 and figures 1-5. | 1-7 |
| A | JP 2014-157477 A (MITSUBISHI HEAVY IND. LTD.) 28 August 2014. See claim 1. | 1-7 |
| A | KR 10-1887415 B1 (CROWDWORKS, INC.) 10 August 2018. See paragraph [0033]. | 1-7 |
| A | KR 10-1999997 B1 (KIM, Yung Soo) 15 July 2019. See paragraph [0064]. | 1-7 |
| A | JP 2010-092099 A (RICOH CO., LTD.) 22 April 2010. See paragraphs [0056]-[0058]. | 1-7 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 November 2020** | **10 November 2020** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

Information on patent family members

| | International application No. |
|---|---|
| | **PCT/KR2020/010390** |

| Patent document cited in search report | | | Publication date (day/month/year) | Patent family member(s) | | | Publication date (day/month/year) |
|---|---|---|---|---|---|---|---|
| JP | 2008-065452 | A | 21 March 2008 | None | | | |
| JP | 2014-157477 | A | 28 August 2014 | None | | | |
| KR | 10-1887415 | B1 | 10 August 2018 | JP | 2019-096319 | A | 20 June 2019 |
| | | | | JP | 6608029 | B2 | 20 November 2019 |
| KR | 10-1999997 | B1 | 15 July 2019 | None | | | |
| JP | 2010-092099 | A | 22 April 2010 | None | | | |

Form PCT/ISA/210 (patent family annex) (July 2019)